# EUROPEAN PATENT SPECIFICATION

(11) **EP 1 583 379 B1**
(45) Date of publication and mention of the grant of the patent: **01.09.2010**
(21) Application number: 05102124.4
(22) Date of filing: 17.03.2005
(51) Int. Cl.: H04W 88/02

(54) **Wireless communication terminal, communication system and method of utilising a frequency resource**
Schnurloses Kommunikationsendgerät, drahtloses Kommunikationssystem und Verfahren zur Verwendung einer Frequenzressource
Terminal de communication sans fil, système de communication sans fil et procéde d'utilisation d'une ressource de fréquences

(30) Priority: 02.04.2004 GB 0407538
(43) Date of publication of application: 05.10.2005
(73) Proprietor: MOTOROLA, INC., Schaumburg, IL 60196 (US)
(72) Inventor: Bar, Eitan, 67899, Tel Aviv (IL); Dory, Dan, 67899, Tel Aviv (IL); Yannay, Alon, 67899, Tel Aviv (IL)
(74) Representative: McCormack, Derek James

(56) References cited:
- EP-A- 0 663 737
- WO-A-97/07604
- GB-A- 2 320 161
- GB-A- 2 375 461

## Description

### Field of the Invention

This invention relates to a wireless communication terminal, a communication system and method of utilising a frequency resource. In particular, it relates to an improved mechanism to efficiently use a frequency resource in a wireless communication system. The invention is applicable to, but not limited to, communication in a TETRA direct mode system.

### Background of the Invention

Wireless communication systems, for example cellular telephony or private mobile radio (PMR) communication systems, typically provide for radio telecommunication links to be arranged between a number of wireless communication units, comprising both handheld and vehicle-mounted units, may be referred to as mobile stations (MSs).

In a wireless private mobile radio (PMR) communication system, such as a TETRA (TErrestrial Trunked Radio) system, which is a system which operates according to standard protocols defined by the European Telecommunications Standards Institute (ETSI), it is known that an MS may operate outside a dedicated network coverage area by communicating in a direct communication link with at least one other MS. Such a communication mode is generally referred to as Direct Mode Operation (DMO). This operation is in contrast to Trunked Mode operation (TMO) that enables the MS to work within network coverage, with communications controlled and facilitated by a switching and management infrastructure (SwMI). Hence, when an MS operates in DMO, there is no system controller and therefore no centralised timing synchronisation, to synchronise the timing of communications between MSs. Synchronisation within DMO occurs only on a particular frequency carrier, where a receiving (slave) MS synchronises its reception and subsequent reply transmissions to the calling (master) MS. DMO is therefore may be referred to as an unsynchronised mode of operation.

The TETRA DMO protocol operates in half-duplex mode, where data or voice information can be transmitted in both directions on a signal carrier, but not at the same time. In a normal mode of operation, all MSs that are participating in a call are subject (by the protocol) to use two TDMA time slots out of the existing four time slots. These two TDMA time slots form the channel.

When a TETRA DMO user makes use of the radio frequency (RF) channel, for either a private (individual to individual) call or a group call, the channel is actually reserved for the private call or a group call for the whole of the call duration. During this time, the only caveat to this reservation is that other users may 'pre-empt' the use of this channel if they require a service of higher priority. Notwithstanding the opportunity to 'pre-empt' a channel, only one service may exist on that RF channel at any time.

The pre-emption procedure, to utilise an already 'in-use' frequency resource by interrupting an ongoing call, is described in the TETRA standard, in ETSI EN 300 369-3 - Part 3: Mobile Station to Mobile Station (MS-MS) Air Interface (AI) protocol. The pre-emption procedure allows any DM MS, whether it belongs to the group for which a call is being conducted or to some other group, to send to the Master MS of the ongoing call a special dedicated protocol data unit (PDU) message. The special dedicated PDU is sent on pre-determined time slots to indicate that a higher priority call has to be executed. The Master MS, upon receiving the request, leaves the channel and transmits an appropriate signalling message to indicate to the members of the group (for the ongoing call), and the requestor, that the call is being released and the alternative pre-emption request has been granted. As soon as the Master MS finishes transmitting this signalling message, the originating pre-emptor starts the standard call set-up procedures. Notably, if the ongoing call has the same 'emergency' priority, then under the current protocol the 'in-distress' user will not be able to pre-empt the call until the initial call ends.

Thus, in summary, the known call pre-emption procedure is the only available mechanism for an MS to initiate a call when there is an ongoing call on an RF carrier. It has the disadvantage of ending the ongoing call, even when an acceptable resource, i.e. on another RF carrier, may be available. In addition to this, the call pre-emption mechanism may be initiated only for a call with higher priority than that of the ongoing one. Furthermore, such a pre-emption procedure may be undesirable in certain situations, for example where an immediate emergency call is needed, but where the user may also be interested in hiding the fact that (s)he is calling for help.

A related issue of channel usage in DMO is a frequency efficient (FE) mode, which serves two concurrent half-duplex calls on the RF carrier. When a service (i.e. a call) exists on a first channel in FE mode, say by a first MS using two TDMA timeslots, then a second call may be initiated on the remaining two unused TDMA time slots to form a second channel. Using this mode of operation requires hardware and software support of the MS. Clearly, by enabling a number of MSs to support this mode of operation, the channel capacity may be increased.

Thus, there exists a need to provide a wireless communication unit, an unsynchronised wireless communication system, a protocol and method of efficiently using a frequency resource wherein the aforementioned disadvantages may be alleviated.

### Summary of Invention

In accordance with a first aspect of the present invention there is provided a transmitting wireless communication unit (or terminal, e.g. mobile station). The transmitting wireless communication unit is capable of communication with a second communication unit on an unsynchronised communication system employing a number of frequency resources (channels formed by use of RF carriers). The wireless communication unit comprises a synchronisation mechanism to synchronise a timing of the wireless communication unit to an existing call on a first frequency resource and a transmitter for transmitting on the first frequency resource. A signal processor, operably coupled to the transmitter, is arranged to transmit one or more messages in one or more unused time slot(s) in conjunction with the existing call, where the one or more messages do not relate to the existing call.

In other words, the one or more messages comprise a second communication on the first frequency resource (channel) whilst the existing call is taking place, i.e. in parallel with the existing call. The existing 'call' may be a communication of user speech information, or of other user information, e.g. data ('text'), picture or video information.

In accordance with a second aspect of the present invention there is provided a receiving wireless communication unit. The receiving wireless communication unit comprises a synchronisation mechanism to synchronise to an existing call on a first frequency resource and a receiver operably coupled to the synchronisation mechanism, for receiving on the first frequency resource of the plurality of frequency resources. The wireless communication unit further comprises a signal processor, operably coupled to the receiver and arranged to receive one or more messages in any unused time slot within the existing call, where the one or more messages do not relate to the existing call.

In accordance with a third aspect of the present invention, an unsynchronised wireless communication system is provided, as claimed in Claim 13.

In accordance with a fourth aspect of the present invention, a method of utilising a frequency resource in an unsynchronised communication system is provided. The method comprises the steps of communicating between two or more communication units in a call on one or more time slots of a frequency resource and synchronising by a wireless communication to the existing call on the frequency resource. The method further comprises the step of transmitting or receiving by the wireless communication unit one or more message(s) in one or more unused time slot(s) within the existing call, where the one or more messages do not relate to the existing call.

Preferably, the transmission on the first frequency resource is a dedicated protocol data unit (PDU) message (i.e. a message which a receiving terminal is pre-configured to recognise) which identifies a 'fox-like' transmission on the first frequency resource, in addition to an existing call. The dedicated PDU preferably identifies any form of transient transmission, for example one or more of the following: an in-distress call, a short message service, a location of a communication unit, a status message.

Furthermore, the message/PDU may be arranged to identify a location element and/or an identifier of the transmitting wireless communication unit, and/or a destination address of one or more receiving wireless communication unit(s), for example a group of users or an individual user or the whole mobile network the ability to send a discrete message to the whole mobile network is viewed as being particularly advantageous with regard to sending an 'in-distress' message.

In this manner, by provision of a mechanism to transmit one or more messages within unused timeslots of an existing call, an improved use of a limited radio frequency (and time) resource is achieved. This is particularly beneficial in an unsynchronised direct mode scenario, where optimal use of the frequency and time resource is rarely achieved.

Where a terminal generates and transmits a message (e.g. a fox like distress message referred to earlier) the message may be on each of a plurality of RF carriers and each carrier may already be in use by an existing call (with one or more different calls taking place on each carrier) or a call may come into use on the channel whilst the message is being sent in the manner described. Each receiving terminal may monitor each of a plurality of carriers for messages whilst in a channel idle, channel reserved or channel occupied state.

Further features of the present invention are as provided in the dependent claims and are apparent from the disclosure in the embodiments to be described.

### Brief Description of the Drawings

Embodiments of the present invention will now be described by way of example with reference to the accompanying drawings, in which:
FIG. 1 illustrates a wireless direct mode communication system adapted in accordance with preferred embodiments of the present invention;
FIG. 2 illustrates a timing diagram of a TETRA DMO timing structure adapted in accordance with preferred embodiments of the present invention;
FIG. 3 illustrates a wireless direct mode communication unit adapted in accordance with preferred embodiments of the present invention; and
FIG. 4 illustrates a flowchart of a mechanism to utilise unused timeslots of an existing TETRA DMO call, according to preferred embodiments of the present invention.

### Description of embodiments of the invention

The inventive concept of the present invention is described with reference to a TETRA DMO communication system by way of illustration. In summary, a preferred embodiment of the present invention proposes a new dedicated transmission mechanism that exploits unused time slots in TETRA DMO communication. In effect, unused time slots may be used in parallel with an existing call, beneficially to grant an additional service for other users. Thus, the level of service that the TETRA DMO protocol is providing to DM users is upgraded. Implementing the inventive concepts described herein will enable at least two (and up to, say, eight) concurrent services on each of the TETRA DMO carrier frequencies.

Although a preferred embodiment of the present invention is described with reference to a wireless TETRA DMO subscriber unit, it is within the contemplation of the present invention that the inventive concepts can be applied equally to any MS-to-MS wireless protocol, other wireless DMO communication units and other timing structures or protocols. It is also envisaged that the inventive concepts can also be incorporated, in general, in any subscriber unit such as one operating in TMO or in 'conventional' walkie-talkie type communication systems having no infrastructure.

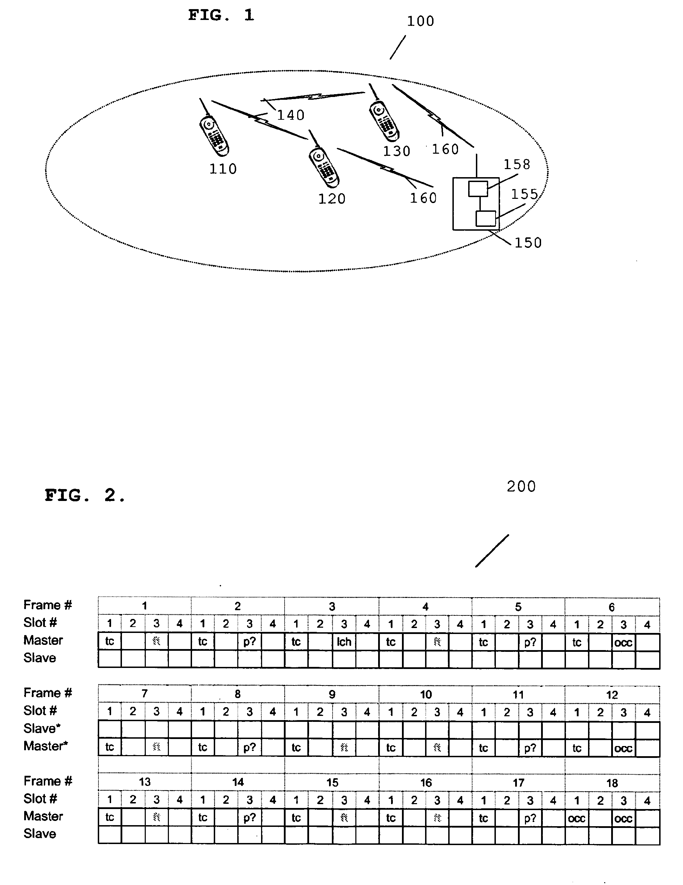

In wireless DMO communication systems, such as that illustrated in FIG. 1, there are typically two methods of communicating between MSs. A first method is a direct communication between two MSs. Here, a first MS 110 is able to set up a direct communication 140 with a second MS 120 or a third MS 130. In a true DMO communication system a number of MSs will be able to communicate with a number of other MSs at any instant in time, with three MSs 110, 120 and 130 shown for clarity purposes only.

A second method uses one or more intermediary communication unit(s) 150 as normally used in DMO but not TMO to forward a communication 160 received from, say, the second MS 120 to be re-transmitted or routed to, say, the third MS 130. The intermediary communication unit is preferably a DM gateway or repeater that includes a radio frequency transceiver circuit 158 operably coupled to a signal processor function 155.

In essence, the criterion that sets the number of concurrent services that can be provided between an initiating (master) DMO MS 110, and other DMO MSs 120 and 130, is based on the degree of reliability required of the additional service, i.e. the more times a PDU transmission is repeated (thereby improving the reliability of the transmission reaching and being successfully decoded by the intended recipient) the fewer concurrent services can be used.

The inventive concepts described herein provide a mechanism to enable transmission of a new special dedicated protocol data unit (PDU) message, on a constant basis, and for as long as the MS user of the initiating message does not retrieve their request. It is envisaged that the destination address of this dedicated synchronized PDU may be an individual user or a group of users. Alternatively, the destination address may be an address of the whole network using the mobile network identity (MNI), which describes the range of relevant MS addresses that will interpret this PDU as a relevant one for them. Addressing the whole DM network in this manner is seen as particularly advantageous for a distress/emergency service request, thus enabling a maximum number of MSs to receive the message. The same message may be sent out on a plurality of RF carriers.

In addition, the dedicated synchronized PDU preferably further comprises the individual address of the transmitting DMO MS 110, which is for example the MS in-distress. In an enhanced embodiment of the present invention, when the initiating DMO MS 110 supports a location-determination function, such as a global positioning system (GPS), the dedicated synchronized PDU preferably further comprises a location element.

Transmission on an available channel starts according to the current TETRA call set-up procedure by transmission of an 'in-distress' call or any other 'fox-like' PDU.
The expression 'fox-like' service is generally used for a 'call' where one party is transmitting its information on the channel and does not expect a special response from the listeners, whether they are active or not. Such a transmission is preferably transmitted as a synchronization PDU, to enable other MSs to synchronise to the transmission. According to the TETRA standard, the transmission is performed on between eight and sixteen consecutive timeslots. Once the channel becomes occupied it will not be evacuated until the user withdraws the request. During the time that the MS occupies the channel, the MS that is 'in-distress' uses one or more special pre-dedicated time slot (according to the guidelines described above) to transmit the 'distress' PDU, during the consecutive timeslots.

In order to understand the context of the present invention, let us first consider the TETRA DMO timing structure as it is currently defined. The TETRA timing structure uses a time division multiple access (TDMA) protocol. The timing structure is arranged, for each frequency channel, in multi-frames, with each multi-frame comprising eighteen (rolling) time frames. Each time frame is divided into four timeslots.

In the preferred embodiment of the present invention, the new, special pre-dedicated timeslot occurs three times in a multi-frame. Notably, in the TETRA DMO standard, the current unused timeslots are time slot '3' of frames '1', '7', and '13' (or frames '4', '10' and '16' in the case where interference with a DM-GW or DM-REP has to be eliminated. For completeness, it is noteworthy that two more unused slots in frames 15 and 16 are also unused but are not employed in the preferred embodiment of the present invention. In the preferred embodiment of the present invention, the selection of the particular frames used for the dedicated PDU may be pre-set, or continuously adapted according to the system configuration. For example, if the working environment is known to contain DM-REPs or DM-GWs, then the particular frames used for the dedicated PDU are pre-set.

If a call already exists on a channel, i.e. a service has commenced, then the DMO MS 110 adapts itself to this timing structure. Otherwise, if the service starts on a free (available) channel, and no DM-REPs or DM-GWs are anticipated, the DMO MS 110 preferably selects any frame it wishes.

When the channel is already occupied, the DMO MS 110 that is 'in-distress', or is using any other of the 'fox-like' services, preferably uses the same pre-dedicated time slots that are unused by the master (originating) MS. However, since the timing of frame transmissions has previously been defined by the master MS, the 'in-distress' MS, or MS using any other of the 'fox-like' service, is required to transmit its 'fox-like' service PDU using this timing frame in a slotted manner. Thus, if a service already exists, then the current master MS dictates the frame and slot regime and the 'in-distress' MS has to transmit its PDU on only the allowed frames within a multi-frame.

It is noteworthy that when using only two of the eight opportunities a total of four additional services may exist in parallel, as illustrated in the timing diagram of FIG. 2. Within FIG. 2, the following TETRA abbreviations are used:
'occ' : equivalent to a DM-OCCUPIED PDU transmission;
tc: representing traffic transmission;
lch: representing slots available for linearization;
p?: representing slots available for pre-emption requests; and
ft: representing slots unused by the standard while the MS is in a channel occupied state, and therefore available for fox-like transmission in accordance with the preferred embodiment of the present invention.

The number of different additional services that exist in parallel may be pre-defined i.e. in this case the number may be set prior to the activation, or be set as dynamic. In this latter case each MS using the service will either transmit the dedicated PDU for a pre-configured number of times on pre-dedicated frames or alternatively, the MS could decide that if the nature for which the service is invoked is not urgent, no such limitation would exist.

If a user that is not participating in a 'distress call' wishes to establish another call in parallel (while the "distress call" is the only one that currently exists on the channel), that user will use the timing dictated by the 'in-distress' MS for transmitting its call set-up PDU. At this time the user is preferably advised not to interfere with the 'in-distress' PDU. Thus, the preferred embodiment allows a regular DMO call to be initiated in parallel to the 'distress call'.

In practice, the MS knows that an existing call/transmission exists on the channel. Consequently, since the potential 'fox-like' transmission opportunities are known, it is possible for the MS to eliminate the set-up transmissions on the corresponding frames.

Otherwise, when the channel is free, the MS will use the known call set-up procedures, as defined by the TETRA DMO standard. As such, the call set-up procedure for this MS would remain the same, except that it will have to clearly declare for the reservation time those unused timeslots to be used in supporting the aforementioned inventive concepts.

It is known that an 'end-of-call' message may occur at any time. According to the TETRA standard the PDU indicating an 'end-of-call' message is transmitted on slot '1' and slot '3' of between two and four consecutive frames. Here, the aforementioned proposal to use slot '3' in one or more of the eight following frames: '1', '7', '9', '13' and '15' (or frames '4', '10' and '16' in the case where interference with a DM-GW or DM-REP has to be eliminated), still enables an 'end-of-call' message to occur at a frame dedicated to support the 'in-distress' service. However, since the standard demands that, for each such slot, the Master MS shall also send the PDU in the corresponding slot '1' of the very same frame, the MS 'in-distress' is able to detect such an 'end-of-call' message and thereby not send the 'in-distress' PDU on the corresponding slot '3' of the same frame. This means that such an MS will actually be required to open its receiver on slot '1' on each of the frames where slot '3' is used for transmission.

Advantageously, the Master MS is configured to open its receiver to obtain such 'fox-like' PDU transmissions. Once such a PDU is received, the master MS is able to set a currently unused bit within the DM-OCCUPIED PDU (transmitted three times within a multi-frame) to indicate to its slave MSs that an 'in-distress' PDU (or any other 'fox-like' PDU) is transmitted. Preferably, the unused bit is used as a flag by the Master MS upon detecting a 'fox-like' PDU, to indicate whether the particular slot is used for, say, an 'in-distress' call. The slave MSs, having received this information, are able to configure themselves to open their receiver at the slots dedicated for this PDU in order to receive it. The slave MSs may monitor a plurality of carriers in this way.

In an enhanced embodiment of the present invention, the 'in-distress' PDU may be transmitted to the whole mobile network using the mobile network identifier (MNI) address. Consequently, any MS using or capable of receiving the same RF carrier is capable of receiving the PDU. An MS that supports handling of this special dedicated PDU will not enter the 'in-distress' call as a slave but rather will be satisfied with only displaying the 'in-distress' (or any other 'fox-like') information to the user application. It is envisaged that such information may comprise a user ID, any location information, or one or more pre-defined set of messages based on a value, for example, a '1' value to indicate a 'call me back' message; a '2' value to indicate 'I' ll get back to you later' message; etc.

In a further enhanced embodiment of the present invention, it is envisaged that the MS may be configured to monitor several RF carriers at the same time.
Adopting such a mechanism for the channel surveillance procedure enables the 'in-distress' MS to transmit the PDU on more than one RF carrier simultaneously. It is envisaged that the mechanism described in UK Patent Application 0328923.8, having the same Applicant as the present invention, may be employed to allow an MS to monitor more than one RF carrier at a time. Thereafter, the MS is able to transmit the 'fox' transmission on each carrier in accordance with the aforementioned technique, where transmission in any one frame will always be on one DMO channel.

Although the preferred embodiment of the present invention is described with reference to a wireless TETRA DMO subscriber unit, it is within the contemplation of the present invention that the inventive concepts can be applied equally to any MS-to-MS wireless DMO protocol, other wireless DMO (i.e. unsynchronised or single carrier synchronised) communication units and other timing structures.

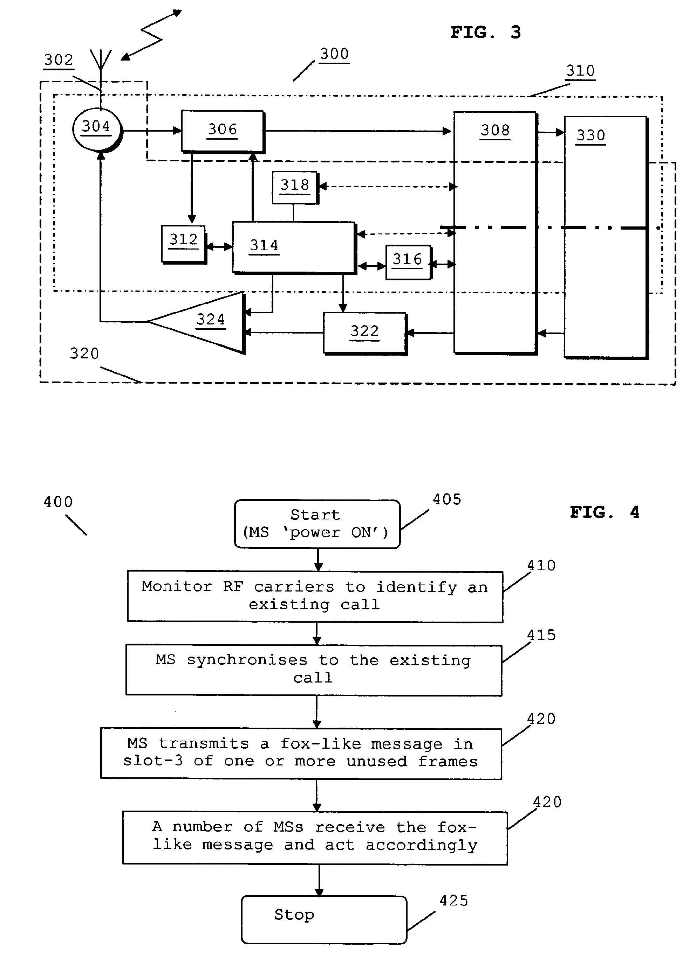

Referring now to FIG. 3, there is shown a block diagram of a wireless DMO TETRA subscriber unit 300 adapted to support the inventive concepts of the preferred embodiments of the present invention. The wireless subscriber unit 300 contains an antenna 302 preferably coupled to a duplex filter or antenna switch 304 that provides isolation between a receiver chain 310 and a transmitter chain 320 within the wireless subscriber unit 300. As known in the art, the receiver chain 310 typically includes receiver front-end circuitry 306 (effectively providing reception, filtering and intermediate or base-band frequency conversion). The front-end circuitry 306 is serially coupled to a signal processing function 308. An output from the signal processing function is provided to a user-interface (UI) 330, which may comprise a display, loudspeaker, etc.

The receiver chain 310 also includes received signal strength indicator (RSSI) circuitry 312 (shown coupled to the receiver front-end 306, although the RSSI circuitry 312 could be located elsewhere within the receiver chain 310). The RSSI circuitry 312 is coupled to a controller 314 for maintaining overall subscriber unit control. The controller 314 is also coupled to the receiver front-end circuitry 306 and the signal processing function 308 (generally realised by a digital signal processor (DSP)). The controller 314 may therefore receive bit error rate (BER) or frame error rate (FER) data from decoded signals. The controller 314 is coupled to the memory device 316 for storing operating regimes, such as decoding/encoding functions and the like. A timer function 318 is typically coupled to the controller 314 to control the timing of operations (transmission or reception of time-dependent signals) within the wireless subscriber unit 300.

As regards the transmit chain 320, this essentially includes user-interface 330 comprising elements such as a microphone, keypad, etc. coupled in series to a transmitter/modulation circuit 322. Thereafter, any transmit signal is passed through a RF power amplifier 324 to be radiated from the antenna 302. The transmitter/modulation circuitry 322 and the power amplifier 324 are operationally responsive to the controller, with an output from the power amplifier 324 coupled to the duplex filter or antenna switch 304. The transmitter/modulation circuitry 322 and receiver front-end circuitry 306 comprise frequency up-conversion and frequency down-conversion functions (not shown).

The inventive concepts described herein provide a mechanism to enable transmission of a new special dedicated protocol data unit (PDU), preferably on a constant basis, and for as long as the user does not retrieve their request. The transmission of the PDU is preferably triggered following, for example, the pressing of a pre-configured combination of keys on a keypad. It is envisaged that a particular combination of keys may be used by a DM MS to initiate, say, an 'emergency call' or any other suitable 'fox-like' service, such as transmitting a location, or transmitting weather data, or some kind of 'status' message, etc. According to the preferred embodiment of the present invention, the activation is performed only once. It is envisaged that the transmission may be halted by, say, terminating the existing call or by pressing a termination button or pressing a further pre-determined set of keys.

It is envisaged that the destination address of this dedicated synchronized PDU may be an individual user or a group of users. Alternatively, as mentioned earlier, the destination address may be an address of the whole network using the mobile network identity (MNI), which describes the range of relevant MS addresses that will interpret this PDU as a relevant one for them.
Addressing the whole DM network in this manner is seen as particularly advantageous for a distress/emergency service request, thus enabling a maximum number of DM MSs to receive the message.

In addition, the dedicated synchronized PDU preferably further comprises the individual address of the transmitting MS, for example the MS 'in-distress'. In an enhanced embodiment of the present invention, when the initiating MS supports a location function, such as a global positioning system (GPS), the dedicated synchronized PDU preferably further comprises a location element.

Furthermore, in accordance with the preferred embodiment of the present invention, the signal processing function 308 has been adapted to adjust the timing of receive operations, such as adapting the receiver chain 310 to decode 'fox-like' transmissions in slot-1 of particular frames, in addition to decoding the normal, existing call. In addition, the signal processing function 308 may adapt the timing function 318 to enable the receiver to receive and decode messages on additional RF carriers and/or further timeslots to that currently employed in the TETRA DMO MS.

A skilled artisan will appreciate that the inventive concepts herein described can be applied to any number of RF carriers, depending upon the communication system and underlying protocol being used.

The various adapted components within the TETRA DMO MS 300 can be realised in discrete or integrated component form. More generally, the functionality associated with using unused (and therefore available) timeslots for a fox-like service such as an 'in-distress' application, and control the associated receive operations, may be implemented in a respective communication unit in any suitable manner. For example, new apparatus may be added to a conventional communication unit, or alternatively existing parts of a conventional communication unit may be adapted, for example by reprogramming one or more processors 308 therein. As such, the required adaptation may be implemented in the form of processor-implementable instructions stored on a storage medium, such as a floppy disk, hard disk, programmable read-only memory (PROM), random access memory (RAM) or any combination of these or other storage media.

Referring now to FIG. 4, a flowchart 400 illustrates a mechanism to utilise unused timeslots of an existing call, on one or more radio frequency channels by a TETRA DMO communication unit, according to the preferred embodiments of the present invention. The process starts in step 405 by a MS being powered on. The MS then monitors the radio frequency resource to identify an existing call, as shown in step 410. Once an existing call has been identified, the MS synchronises to the timing of this ongoing call, in accordance with the TETRA DMO standard, as in step 415.

The MS then transmits a message, for example a 'fox-like' PDU, as shown in step 420. Preferably, the message is sent in slot-3 on particular TETRA frames. In this manner, a number of MSs are able to receive the message and can act accordingly, for example displaying to a user of the receiving MS a message that another MS user is 'in-distress'. If the channel is 'free', the MS then just transmits the message and receiving MSs synchronise to this transmission.

Although the preferred embodiment of the present invention has been described with respect to use of unused slots for an 'in-distress' application in a fox-like service, it is envisaged that other applications/messages/uses can be supported in these unused slots, such as, short message service (SMS) messages, pre-defined 'status' messages, weather information, location information, presence information, etc.

In summary, the preferred embodiment proposes a mechanism of transmitting a PDU (message), of a 'fox-like' nature, in parallel to an existing call being conducted on the same channel. Advantageously, the provision of this additional DM communication is implemented without degrading the channel service for other MSs using the same RF carrier.

It will be understood that a wireless communication unit, a wireless communication system and method of utilising a frequency resource therein, as described above, provide at least one or more of the following advantages:
(i) A number of additional (up to eight concurrent) services can be supported on each of the direct mode channels;
(ii) A more optimum use of the limited radio frequency (and time) resource is achieved by utilising unused slots of an existing call; and
(iii) The proposal is compatible with the existing TETRA DMO protocol.

Whilst specific, and preferred, implementations of the present invention are described above, it is clear that one skilled in the art could readily apply variations and modifications of such inventive concepts.

Thus, a preferred embodiment of the present invention has provided a wireless communication unit, wireless communication system and a method of better utilising an unsynchronised (DMO) frequency resource that substantially alleviates the aforementioned problems with prior art arrangements.

## Claims

1. A transmitting wireless communication terminal (300) capable of communication with at least a second communication terminal on an unsynchronised communication system employing a number of frequency resources, wherein the wireless communication terminal (300) is operable by a synchronisation procedure to synchronise to an existing first communication on a first frequency resource and a transmitter (320) for transmitting on the first frequency resource, the wireless communication terminal (300) further including a signal processor (308) operably coupled to the transmitter (320) and operable to generate, for transmission by the transmitter, in one or more unused time slots, a second communication on the first frequency resource whilst the first communication is taking place.

2. A transmitting terminal according to claim 1 which is operable to transmit a second communication in unused time slots on each of a plurality of frequency resources whilst a communication is taking place on one or more of the frequency resources.

3. A receiving wireless communication terminal (300) capable of communication with a second communication unit on an unsynchronised communication system employing a number of frequency resources, wherein the wireless communication unit (300) comprises a synchronisation mechanism to synchronise to an existing call on a first frequency resource and a receiver (310) for receiving on the first frequency resource, the wireless communication unit (300) being **characterised by** a signal processor (308), operably coupled to the receiver (310) and operable to receive, from reception by the receiver, in one or more unused time slots, a second communication on the first frequency resource whilst the first communication is taking place.

4. A terminal according to claim 3 and which is operable to receive a second communication in unused time slots on each of a plurality of frequency resources whilst a communication is taking place on one or more of the frequency resources.

5. A terminal according to any one of the preceding claims wherein one of the first and second communications is a communication of user information and the other one of the first and second communications is a message generated by a terminal optionally in response to a user instruction signal and is sent at least partly in parallel with the other communication.

6. A terminal according to claim 5 wherein one of the first and second communications comprises a dedicated protocol data unit (PDU) message recognised by any receiving terminal to identify a fox-like transmission on the first frequency resource and the terminal is operable to generate and transmit or to receive the protocol data unit (PDU) message.

7. A terminal according to any one of claims 5 or 6 wherein the message generated by a terminal and sent at least partly in parallel with another communication comprises a transient transmission indicating one or more of: an in-distress call, a short data service message, a location of the communication terminal, an identifier of the communication terminal, an identifier or destination address of one or more target terminals, a group identity of target terminals, a mobile network identifier, and a status message relating to a status of the communication terminal.

8. A terminal according to any one the preceding claims which is operable to generate and transmit a protocol data unit (PDU) message and includes a user interface (330) operably coupled to the signal processor (308) such that the transmission of the dedicated PDU is triggered as a result of a user operating any preconfigured key or combination of keys on the user interface.

9. A terminal according to any one of the preceding claims which is operable according to TETRA standard protocols.

10. A terminal according to Claim 9 operable to utilise slot-3 of any one or more of frames '1', '4', '7', '9', '10', '13' '15' and '16' of the TETRA DMO timing structure, while the terminal is in a channel occupied or channel reserved state.

11. A receiving wireless communication terminal according to any of preceding Claims 3 to 10 further including a timer (318), operably coupled to the signal processor (308), such that the signal processor (308) is configured to adapt a timing parameter of the timer (318) in order to receive both the existing first communication and the second communication.

12. A receiving wireless communication terminal according to any one of claims 3 to 10 wherein the terminal is operable to receive the second communication whilst the terminal is receiving or transmitting at least part of the first communication.

13. A wireless communication system adapted to support communication between at least two wireless communication terminals each of which is a terminal according to any of the preceding claims.

14. A method of utilising a frequency resource in an unsynchronised communication system comprising the steps of:
communicating between two or more communication units in a first communication in one or more time slots associated with a frequency resource; and
synchronising by a wireless communication terminal to the existing first communication on the frequency resource; and
transmitting or receiving by the wireless communication terminal, in one or more unused time slots, a second communication on the frequency resource whilst the first communication is taking place.

15. A method according to Claim 14 wherein the first or second communication comprises a dedicated protocol data unit (PDU) message identifying a fox-like transmission on the frequency resource.

## Patentansprüche

1. Übertragendes schnurloses Kommunikationsendgerät (300), das in der Lage ist, mit mindestens einem zweiten Kommunikationsendgerät in einem nicht synchronisierten Kommunikationssystem unter Verwendung einer Zahl von Frequenzressourcen zu kommunizieren, wobei das schnurlose Kommunikationsendgerät (300) durch ein Synchronisierungsverfahren, um mit einer bestehenden ersten Kommunikation auf einer ersten Frequenzressource zu synchronisieren und einem Sender (320) umfasst, der zum Übertragen auf der ersten Frequenzressource betriebsbereit ist, wobei das schnurlose Kommunikationsendgerät (300) weiterhin umfasst: einen Signalprozessor (308), der betriebsbereit an den Sender (320) gekoppelt ist, und betriebsbereit ist, um zur Übertragung durch den Sender in einem oder mehreren nicht genutzten Zeitschlitzen eine zweite Kommunikation auf der ersten Frequenzressource zu erzeugen, während die erste Kommunikation stattfindet.

2. Übertragendes Endgerät gemäß Anspruch 1, das betriebsbereit ist, um eine zweite Kommunikation in nicht genutzten Zeitschlitzen auf jeder von einer Mehrzahl von Frequenzressourcen zu übertragen, während eine Kommunikation auf einer oder mehreren der Frequenzressourcen stattfindet.

3. Empfangendes schnurloses Kommunikationsendgerät (300), das in der Lage ist, mit einer zweiten Kommunikationseinheit in einem nicht synchronisierten Kommunikationssystem unter Verwendung einer Zahl von Frequenzressourcen zu kommunizieren, wobei die schnurlose Kommunikationseinheit (300) einen Synchronisierungsmechanismus zum Synchronisieren mit einem bestehenden Anruf auf einer ersten Frequenzressource und einen Empfänger (310) zum Empfangen auf der ersten Frequenzressource umfasst, wobei die schnurlose Kommunikationseinheit (300) durch einen Signalprozessor (308) **gekennzeichnet** ist, der betriebsbereit an den Empfänger (310) gekoppelt ist und betriebsbereit ist, um vor einem Empfang durch den Empfänger in einem oder mehreren nicht genutzten Zeitschlitzen eine zweite Kommunikation auf der ersten Frequenzressource zu empfangen, während die erste Kommunikation stattfindet.

4. Endgerät gemäß Anspruch 3, das betriebsbereit ist, um eine zweite Kommunikation in nicht genutzten Zeitschlitzen auf jeder von einer Mehrzahl von Frequenzressourcen zu empfangen, während auf einer oder mehreren der Frequenzressourcen eine Kommunikation stattfindet.

5. Endgerät gemäß einem der vorangehenden Ansprüche, wobei eine der ersten und zweiten Kommunikationen eine Kommunikation von Anwenderinformationen und die andere der ersten und zweiten Kommunikationen eine Nachricht ist, die durch ein Endgerät erzeugt wird, wahlweise in Reaktion auf ein Anwenderbefehlssignal, und mindestens teilweise parallel mit der anderen Kommunikation gesendet wird.

6. Endgerät gemäß Anspruch 5, wobei eine von den ersten und zweiten Kommunikationen eine dedizierte PDU-Nachricht (PDU = Protokolldateneinheit) umfasst, die durch jedes beliebige Endgerät erkannt wird, um eine fuchsartige Übertragung ("fox-like transmission") auf der ersten Frequenzressource zu identifizieren, und das Endgerät betriebsbereit ist, die PDU-Nachricht (PDU = Protokolldateneinheit) zu erzeugen und zu übertragen oder zu empfangen.

7. Endgerät gemäß einem der Ansprüche 5 oder 6, wobei die durch ein Endgerät erzeugte und mindestens teilweise parallel mit einer anderen Kommunikation gesendete Nachricht eine vorübergehende Übertragung umfasst, die anzeigt: einen Notruf, eine SMS, einen Standort des Kommunikationsendgerätes, einen Identifizierer des Kommunikationsendgerätes, einen Identifizierer oder eine Zieladresse von einem oder mehreren Zielendgeräten, eine Gruppenidentifizierung von Zielendgeräten, einen mobilen Netzwerkidentifizierer und/oder eine Zustandsnachricht in Bezug auf einen Zustand des Kommunikationsendgerätes.

8. Endgerät gemäß einem der vorangehenden Ansprüche, das betriebsbereit ist, um eine PDU-Nachricht (PDU = Protokolldateneinheit) zu erzeugen und zu übertragen, und eine Anwenderschnittstelle (330) umfasst, die betriebsbereit an den Signalprozessor (308) gekoppelt ist, sodass die Übertragung der dedizierten PDU als ein Ergebnis davon getriggert wird, dass ein Anwender einen beliebigen vorkonfigurierten Schlüssel oder eine beliebige Kombination von Schlüsseln auf der Anwenderschnittstelle anwendet.

9. Endgerät gemäß einem der vorangehenden Ansprüche, das gemäß TETRA-Standardprotokollen betriebsbereit ist.

10. Endgerät gemäß Anspruch 9, das betriebsbereit ist, um Schlitz 3 von einem oder mehreren der Rahmen '1', '4', '7', '9', '10', '13', '15' und '16' von der TETRA-DMO-Timingstruktur zu verwenden, während sich das Endgerät in einem "Kanal besetzt"- oder "Kanal reserviert"-Zustand befindet.

11. Empfangendes schnurloses Kommunikationsendgerät gemäß einem der vorangehenden Ansprüche 3 bis 10, das weiterhin einen Timer (318) umfasst, der betriebsbereite an den Signalprozessor (308) gekoppelt ist, sodass der Signalprozessor (308) konfiguriert ist, um einen Timing-Parameter des Timers (318) anzupassen, um sowohl die bestehende erste Kommunikation als auch die zweite Kommunikation zu empfangen.

12. Empfangendes schnurloses Kommunikationsendgerät gemäß einem der vorangehenden Ansprüche 3 bis 10, wobei das Endgerät betriebsbereit ist, um die zweite Kommunikation zu empfangen, während das Endgerät mindestens einen Teil der ersten Kommunikation empfängt oder überträgt.

13. Schnurloses Kommunikationssystem, das adaptiert ist, um eine Kommunikation zwischen mindestens zwei schnurlosen Kommunikationsendgeräte zu unterstützen, wobei jedes der beiden Endgeräte ein Endgerät gemäß einem der vorangehenden Ansprüche ist.

14. Verfahren eines Verwendens einer Frequenzressource in einem nicht synchronisierten Kommunikationssystem, das die folgenden Schritte umfasst:
Kommunizieren zwischen zwei oder mehreren Kommunikationseinheiten in einer ersten Kommunikation in einem oder mehreren Zeitschlitzen, die mit einer Frequenzressource verknüpft sind; und
Synchronisieren durch ein schnurloses Kommunikationsendgerät zu der bestehenden ersten Kommunikation auf der Frequenzressource; und
Übertragen oder Empfangen durch das schnurlose Kommunikationsendgerät, in einem oder mehreren nicht genutzten Zeitschlitzen, einer zweiten Kommunikation auf der Frequenzressource, während die erste Kommunikation stattfindet.

15. Verfahren gemäß Anspruch 14, wobei die erste oder zweite Kommunikation eine dedizierte PDU-Nachricht (PDU = Protokolldateneinheit) umfasst, die eine fuchsartige Übertragung auf der Frequenzressource identifiziert.

## Revendications

1. Terminal de communication sans fil (300) émetteur, capable de communiquer avec au moins un deuxième terminal de communication sur un système de communication asynchrone utilisant un certain nombre de ressources de fréquence, le terminal de communication sans fil (300) étant configuré pour se synchroniser, par une procédure de synchronisation, à une première communication existante sur une première ressource de fréquence et comprenant un émetteur (320) pour émettre sur la première ressource de fréquence, le terminal de communication sans fil (300) comprenant en outre un processeur de signaux (308) couplé fonctionnellement à l'émetteur (320) et configuré pour générer, pour une transmission par l'émetteur, dans un ou plusieurs créneaux temporels non utilisés, une deuxième communication sur la première ressource de fréquence pendant le déroulement de la première communication.

2. Terminal émetteur selon la revendication 1, qui est configuré pour transmettre une deuxième communication dans des créneaux temporels non utilisés, sur chacune d'une pluralité de ressources de fréquence, pendant le déroulement d'une communication sur une ou plusieurs des ressources de fréquence.

3. Terminal de communication sans fil (300) récepteur, capable de communiquer avec au moins unie deuxième unité de communication sur un système de communication asynchrone utilisant un certain nombre de ressources de fréquence, l'unité de communication sans fil (300) comprenant un mécanisme de synchronisation pour se synchroniser à une communication existante sur une première ressource de fréquence et un récepteur (310) pour recevoir sur la première ressource de fréquence, l'unité de communication sans fil (300) étant **caractérisée par** un processeur de signaux (308) couplé fonctionnellement au récepteur (310) et configuré pour recevoir, de la réception par le récepteur, dans un ou plusieurs créneaux temporels non utilisés, une deuxième communication sur la première ressource de fréquence pendant le déroulement de la première communication.

4. Terminal émetteur selon la revendication 3, qui est configuré pour recevoir une deuxième communication dans des créneaux temporels non utilisés, sur chacune d'une pluralité de ressources de fréquence, pendant le déroulement d'une communication sur une ou plusieurs des ressources de fréquence.

5. Terminal selon l'une quelconque des revendications précédentes, dans lequel l'une des première et deuxième communications est une communication d'informations utilisateur et l'autre des première et deuxième communications est un message généré par un terminal, éventuellement en réponse à un signal d'instruction de l'utilisateur, et est envoyée au moins partiellement en parallèle avec l'autre communication.

6. Terminal selon la revendication 5, dans lequel l'une des première et deuxième communications comprend un message dédié de type unité de données de protocole (PDU), reconnu par tout terminal récepteur, pour identifier une transmission d'essai sur la première ressource de fréquence, et le terminal est configuré pour générer et transmettre ou recevoir le message de type unité de données de protocole (PDU).

7. Terminal selon l'une quelconque des revendications 5 ou 6, dans lequel le message généré par un terminal et envoyé au moins partiellement en parallèle avec une autre communication comprend une transmission de courte durée indiquant un ou plusieurs des point suivants : un appel de détresse, un message de données court, une localisation du terminal de communication, un identifiant du terminal de communication, un identifiant ou une adresse de destination d'un ou plusieurs terminaux cibles, une identité de groupe de terminaux cibles, un identifiant de réseau mobile, et un message d'état relatif à un état du terminal de communication.

8. Terminal selon l'une quelconque des revendications précédentes, qui est configuré pour générer et transmettre un message de type unité de données de protocole (PDU) et qui comprend une interface utilisateur (330) couplée fonctionnellement au processeur de signaux (308) de telle sorte que la transmission de la PDU dédiée soit déclenchée en résultat d'un actionnement par l'utilisateur d'une quelconque clé ou combinaison de clés préconfigurée sur l'interface utilisateur.

9. Terminal selon l'une quelconque des revendications précédentes, qui est configuré pour fonctionner selon les protocoles standards TETRA.

10. Terminal selon la revendication 9, configuré pour utiliser le créneau temporel 3 de l'une ou de plusieurs quelconques des trames '1', '4', '7', '9', '10', '13', '15' et '16' de la structure de synchronisation TETRA DMO, tandis que le terminal se trouve dans un état "canal occupé" ou "canal réservé".

11. Terminal de communication sans fil récepteur selon l'une quelconque des revendications 3 à 10, comprenant en outre un compteur horaire (318), couplé fonctionnement au processeur de signaux (308), de telle sorte que le processeur de signaux (308) soit configuré pour adapter un paramètre de synchronisation du compteur horaire (318) pour permettre la réception de la première communication existante ainsi que la deuxième communication.

12. Terminal de communication sans fil récepteur selon l'une quelconque des revendications 3 à 10, dans lequel le terminal est configuré pour recevoir la deuxième communication tandis qu'il reçoit ou qu'il émet au moins une partie de la première communication.

13. Système de communication sans fil adapté pour supporter une communication entre au moins deux terminaux de communication sans fil, qui sont chacun un terminal selon l'une quelconque des revendications précédentes. ,

14. Procédé d'utilisation d'une ressource de fréquence dans un système de communication asynchrone comprenant les étapes de :
communication entre deux unités de communication ou plus sur une première communication, dans un ou plusieurs créneaux temporels associés à un ressource de fréquence ; et
synchronisation par un terminal de communication sans fil à la première communication existante sur la ressource de fréquence ; et
émission ou réception par le terminal de communication sans fil, dans un ou plusieurs créneaux temporels non utilisés, d'une deuxième communication sur la ressource de fréquence pendant le déroulement de la première communication.

15. Procédé selon la revendication 14, dans lequel la première ou la deuxième communication comprend un message dédié de type unité de données de protocole (PDU), identifiant une transmission d'essai sur la ressource de fréquence.
